## Europäisches Patentamt
## European Patent Office
## Office européen des brevets

(19)

(11) Publication number: **0 111 945**

–

**A1**

(12) # EUROPEAN PATENT APPLICATION

(21) Application number: **83201616.6**

(22) Date of filing: **11.11.83**

(51) Int. Cl.³: **B 65 G 47/26**

(30) Priority: **30.11.82 NL 8204645**

(43) Date of publication of application:
**27.06.84 Bulletin 84/26**

(84) Designated Contracting States:
**BE DE FR GB NL**

(71) Applicant: **P.L.M. Conveyor Systems B.V.**
**Postbus 70**
**NL-4940 AB Raamsdonksveer(NL)**

(72) Inventor: **Schiedon, Jan**
**P/a Postbus 70**
**NL-4940 AB Raamsdonksveer(NL)**

(74) Representative: **den Boer, Jan Johannes, Ir. et al,**
**Octrooibureau Polak & Charlouis Laan Copes van**
**Cattenburch 80**
**NL-2585 GD The Hague(NL)**

(54) **Apparatus for conveying and accumulating objects.**

(57) This conveying apparatus operates fully mechanical.

It comprises a continuously moving endless conveyor chain (1) to which a carriage (9) is connected.

The carriage carries a friction roller (14) for moving the objects and a three-armed sensor lever (21-23).

The lever senses the presence of an object ahead of a moved object and is pivoted at the reverse or front roller (2) of the chain (1) whereby the carriage (9) may return under the accumulated objects.

FIG. 1

Title: Apparatus for conveying and accumulating objects.

The invention relates to an apparatus for conveying and accumulating objects by means of a continuously drivable endless conveying means, comprising a roller path or similar nearly frictionless support for the objects, secured to a frame carrying a guide for a carriage which in turn is secured to the endless conveying means, said carriage carrying a pivotable sensor, which is actuated by an object present on the roller path in front of the carriage as seen in the driving direction of the conveying means, as well as a carrier provided with a friction coating.

Such apparatus are known. Generally they operate through switches, which are actuated by sensors and abutments. When the objects are placed on a support formed in the apparatus frame they are transported by the conveying means towards the discharge end of the apparatus and are there removed and supplied to a further apparatus, e.g. for packaging or further treatment of certain goods. Since placing as well as removing may occur at unequal intervals, the apparatus should permit accumulating of the goods to a contiguous row at the discharge end.

An apparatus according to the first paragraph of this specification is known from the German Auslegeschrift 2726770. Therein the sensor is a roller and the carrier is an element having a flat upper surface coated with friction material. In this known apparatus the carriage is reciprocated by reversing the driving direction of the chain,

The invention aims at simplifying and improving the known apparatus by eliminating the electric switches and contacts whereby the apparatus becomes cheaper and less sensitive to failure. The invention should also provide an apparatus, the conveying chain of which is continuously driven in the same direction.

This is according to the invention achieved in that the carrier is a friction roller, which is freely rotatable around a shaft, but is adapted to be blocked on its shaft, the blocking or not blocking condition of the roller being dependent on the position of the sensor, which is constituted by a three armed lever, the first arm os which constitutes the sensor proper, the second arm is pivotly connected to one end of a rod, the other end of which traverses the axis of rotation of the friction roller, a compression spring being enclosed between the extrmity of said other rod end and the roller shaft, a gear is coaxially secured to the roller, an engaging means, being secured to the rod at the other side of the shaft

0111945

than the spring, the third lever arm being adapted to be actuated by an abutment adjacent to the ends of the roller path.

As long as the roller is blocked, the carriage takes along with it the object situated on top of the roller. If this object arrives at an object which has been displaced earlier or at the end of the rollerpath, then the sensor deblocks the roller, so that this may roll along the bottom of the objects.

Preferably the sensor is a three-armed lever, the first arm of which constitutes the sensor proper, the second arm is pivotably connected to one end of a rod, the other end of which traverses the rotational axis of the friction roller, a compression spring being enclosed between the extremity of this other rod and the roller shaft, a gear being coaxially secured to the roller and an engaging means being secured to the rod at the other side of the shaft than where the spring is situated, the third lever arm being adapted to be actuated by an abutment adjacent to the ends of the roller path.

The direction of movement of the carriage is reversed at the discharge end of the roller path, due to the return of the endless conveying means, e.g. a chain, and the sensor is pivoted by an abutment, so that the sensor and the first roller are released with respect to the objects, so that the carriage may freely return to its starting position.

It is therein advantageous for obtaining a simple and effective construction, if the said abutment is secured to a plate, which in turn is secured to the endless conveying means, said plate extending along the distance between both runs thereof and carrying the abutment at the end opposite to the securing point, said plate being pivotably connected with a spring biassed rod, which is connected to the carriage.

The invention will hereunder be further explained with reference to the drawing showing an embodiment of the apparatus according to the invention, given as an example.

Fig. 1 shows the apparatus when the sensor is in a first position.

Fig. 2 shows the apparatus when the sensor is in a second position.

Figure 3 shows the apparatus in which the sensor is in a third position.

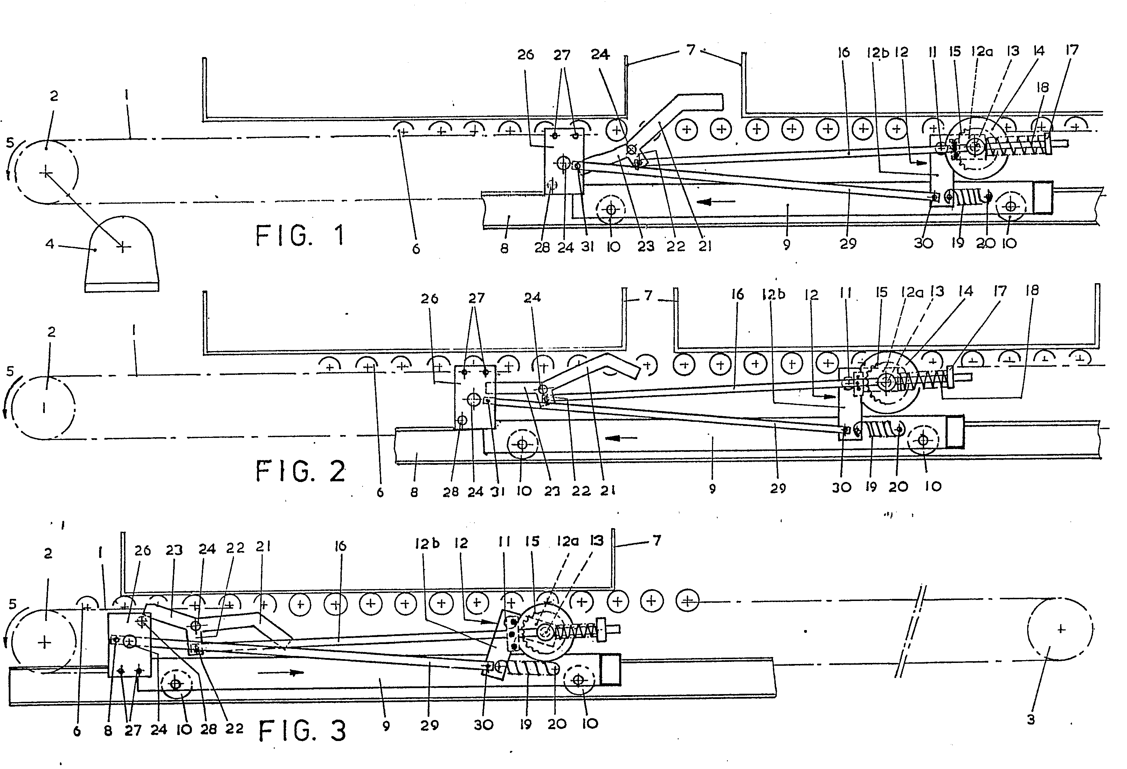

Figure 1 shows the apparatus in a first position. Said apparatus comprises an endless conveying means 1, e.g. a chain, extended along a drive roller 2, seen left in figure 1, and a freely rotatable roller 3 at the other end, to the right in fig. 3. The chain 1 is drivable, by means of a schematically indicated drive 4, the chain moving in the direction of the arrow 5.

Furthermore the apparatus includes an only partially shown frame, having two roller paths, one of which is indicated by the reference number 6 in figure 1. Said roller paths extend parallel to and at both sides of the conveyor chain 1. The upper sides of said rollers are on a slightly higher level than the level of the upper run of the chain 1. Goods may be placed on said roller path, which may be boxes or pallets supporting articles and which are schematically indicated in the drawing by reference number 7. The frame furthermore comprises two guides, one of which is indicated by reference number 8. Said guides are likewise situated at both sides of and parallel to the chain 1 and consist in the embodiment shown of channel members, the flanges of which extend towards the chain. The guides 8 are positioned substantially at the level of the lower run of the chain 1. Along said guides 8 a carriage 9 may ride through travelling wheels 10, mounted to the carriage.

A transversely extending shaft 11 is fixedly mounted on the carriage by any known means. An angle piece 12 is pivotally mounted on said shaft adjacent to its vertex, said angle piece having a substantially horizontal leg 12a and a substantially vertical leg 12b. A shaft 13 is fixedly mounted in the free end of the horizontal leg 12a, a roller 14 being rotatably journalled on said shaft. Said roller carries a friction coating (not shown) e.g. of rubber or a plastic having a high friction coefficient. A gear 15 is secured to the roller 14, which gear likewise is freely rotatably journalled on the shaft 13. A rod 16 traverses the shaft 13 and adjacent to the end of said rod a collar 17 is secured to the right of the shaft, as seen in fig. 1. A compression spring 18 is enclosed between the shaft 13 and the collar 17.

··The free end of the leg 12b of the angle piece is connected to a fixed point 20 of the carriage 9 by means of a tension spring 19.

The other end of the rod 16 is pivotably connected to the second arm 22 of a three-armed lever, also comprising a first arm 21 and a third arm 23. Said lever is connected to the carriage 9 by pivotal mounting around a shaft 24. A plate 26 is provided, pivotally mounted around a shaft 25, which is secured to the carriage 9, said plate being secured in the points 27 to the endless conveyor chain 1, and carries a fixed abutment 28 opposite to said connecting points 27.

Furthermore a rod 29 is pivotally connected at one end in a point 30 to the free end of the leg 12b of the angle piece and pivotally connected with its other end to a fixed point 31 of the plate 26.

Further a rim gear or as shown in fig. 1, to the left of the gear 15, a holder 32 containing balls 33 in fixed recesses of the holder, is secured to the rod 16. The dimensions and distances are such that the spring 18 moves the rod 16 so far to the right that the rollers are in engagement with the tooth spaces of the gear 15 whereby the gear is blocked on the shaft 13 while thereby the centre of the three armed lever has been pivoted around the shaft 24 such that the first or sensing arm 21 projects into the path of the objects 7.

The apparatus as shown operates as follows:
At the entrance side of the apparatus, to the right in figure 1, goods or objects to be conveyed, e.g. pallets carrying articles, are placed onto the roller path 6. For clarity of the discussion it is assumed that in fig. 1 an object 7 to be conveyed is present above the carriage 9 with the friction roller 14 in engagement with the underside of the object, it appearing from fig. 1 that said friction roller is blocked on its shaft.

In that the conveying means 1 is driven at constant velocity, such that the upper run and thereby the carriage 9 move to the left according to the arrow 34, the carriage through the roller 14 takes along the object. As long as the first arm or sensor 21 of the lever is not depressed this situation remains unchanged. If however, the sensor is depressed at the left end of the path by a fixed abutment (not shown) or by an object to be conveyed already present on the roller path in front of the said object, the first arm or sensor 21 of the lever is depressed and engages the bottom of said object. Thereby the lever pivots around its shaft 24 and the second arm 22 pulls the rod 16 to the left, whereby the blocking means 32 is released from the gear 15 and the driving roller 14 becomes freely rotatable around its shaft 13. With continuing movement of the carriage 9 now the roller 14 rolls along the underside of the first object and the sensor 21 moves along the under-side of the second object.

When the carriage 9 arrives at the left end of its path, the plate 26, due to the return of the upper run along the drive roller 2 to the lower run of the chain, becomes situated with its fixing points 27 in the lower run in that said plate has been pivoted around the shaft 25. Thereby the abutment 28 pushes the third arm 43 of the lever so that this is pivoted towards the position of fig. 3. By pivoting the plate 26 also the pivot 31 is moved to the left and the rod 29 is pulled to the left against the influence of the spring 19. Thereby the anglepiece 12, connected to said rod, pivots such that its upper leg 12a moves downwardly and the friction roller 14 is released from the lower side of the overlying object.

Now the carriage 9 may move unrestrained to the right up till the entrance side of the roller path below the goods possibly present on said path. When the plate 26 is again pivoted at the entrance side the abutment 28 frees the three armed  lever and this pivots back to the position of fig. 1 under the influence of the spring 18, while also the angle piece 12 returns to its initial position under the influence of the spring 19. That is, as long as no object to be conveyed is present at the beginning of the entrance side of the path. Should this be the case, then the  lever pivots to the position of fig. 2.

It will be clear, that when no object is present at the position of the driving roller 2 at the left end of the path, the sensor, after having passed an object in the position of figures 1 and 2, also first pivots to the position of fig. 1 before it is pivoted by the plate 26 to the position of fig. 3.

The invention provides an apparatus, which may be manufactured in a simple and relatively cheap manner, which operates mechanically and therefore is hardly sensitive to failure.
An object to be conveyed which has been taken along by the carriage from the entrance of the path is only released by the carriage when the object has been joined with a previously conveyed object or when the relative object reaches the end of the path. If the object is taken from the end of the path, the carriage will fill the emptied space, during the following passage in the conveying direction, with the object which is closest to said empty space. All next objects are joined in the same manner and it is clear that the goods may be accumulated on the path while movement of the carriage may continue.

It is to be noted that the carriage 9 on wheels 10 travelling along guides 8 may be replaced by a different type of carriage, e.g. a monorail structure, with rollers engaging laterally with a central rail. Apart from rollers, the rollerpath 6 may also comprise wheels, discs or different elements if only a nearly frictionless movement of the goods along said path is obtained therewith.

————

CLAIMS

1. Apparatus for conveying and accumulating objects by means of a continuously drivable endless conveying means, comprising a roller path or similar nearly frictionless support for the objects, secured to a frame carrying a guide for a carriage which in turn is secured to the endless conveying means, said carriage carrying a pivotable sensor, which is actuated by an object present on the roller path in front of the carriage as seen in the driving direction of the conveying means, as well as a carrier provided with a friction coating, characterized in that the carrier is a friction roller (14), which is freely rotatable around a shaft (13), but is adapted to be blocked on its shaft, the blocking or not blocking condition of the roller being dependent on the position of the sensor, which is constituted by a three armed lever , the first arm (21) of which constitutes the sensor proper, the second arm (22) is pivotably connected to one end of a rod (16), the other end of which traverses the axis of rotation of the friction roller (14), a compression spring (18) being enclosed between the extremity of said other rod end and the roller shaft, a gear (15) is coaxially secured to the roller (14), an engaging means (32, 33) being secured to the rod (16) at the other side of the shaft (13) than the spring, the third lever arm (23) being adapted to be actuated by an abutment (28) adjacent to the ends of the roller path.

2. Apparatus according to claim 1, characterized in that the said abutment (28) is secured to a plate (26), which in turn is secured to the endless conveying means (1), said plate extending through the distance between both runs of the conveying means and carrying the abutment (28) at the end opposite to the fixation point (27), said plate being pivotally connected to a spring biassed rod (29) connected to the carriage (9).

-------

0111945

FIG. 1

FIG. 2

FIG. 3

European Patent
Office

**EUROPEAN SEARCH REPORT**

0111945
Application number

EP 83 20 1616

## DOCUMENTS CONSIDERED TO BE RELEVANT

| Category | Citation of document with indication, where appropriate, of relevant passages | Relevant to claim | CLASSIFICATION OF THE APPLICATION (Int Cl ³) |
|---|---|---|---|
| D,A | DE-A-2 726 770 (SCHULZE-BERGE) * Claims 1,6,19; figures * | 1 | B 65 G 47/26 |
| A | FR-A-1 493 509 (LE PROTOTYPE INDUSTRIEL) | | |
| A | US-A-3 986 605 (DOOLEY) | | |

TECHNICAL FIELDS SEARCHED (Int. Cl. ³)

B 65 G

The present search report has been drawn up for all claims

| Place of search THE HAGUE | Date of completion of the search 29-02-1984 | Examiner VAN ROLLEGHEM F.M. |
|---|---|---|